# EUROPEAN PATENT APPLICATION

(11) **EP 4 035 825 A1**
(43) Date of publication of application: **03.08.2022**
(21) Application number: 21187040.7
(22) Date of filing: 21.07.2021
(51) Int. Cl.: B23K 26/70, B23K 26/08

(54) **SEMIAUTOMATIC MACHINE FOR LASER PROCESSING OF ELEMENTS TO BE PROCESSED, METHOD AND COMPUTER PROGRAM FOR CONTROLLING THE MACHINE**

(30) Priority: 02.02.2021 IT 202100002156
(71) Applicant: Brentech S.r.l., 36015 Schio (VI) (IT)
(72) Inventor: PRANOVI, Pietro, 36078 Valdagno (IT)
(74) Representative: Autuori, Angelo

(57) **Abstract**

A semiautomatic machine for the laser processing of elements to be processed (E), comprising at least one first and one second loading/unloading area **(15, 15')** of the elements to be processed **(E)** arranged side-by-side, at least one first and one second working area **(21, 21'),** at least one first and one second cradle **(30, 30')** for movable support between the latter and laser shielding means **(40, 40').** Provided for is single laser processing head **(22)** reciprocatingly movable between the first and second processing areas **(21, 21').** The machine further comprises control means **(50).**

## Description

### Field of the invention

The present invention refers to the technical field of industrial automation, and in particular it relates to a semiautomatic machine for the laser processing of elements to be processed.

Furthermore, the invention relates to a method implemented by a computer and a software program for controlling such machine.

### State of the Art

Machines which include a laser processing head, for example for paint stripping mechanical pieces by means of ablative laser are known for example from documents US4671848, US5496985, US5523543, US5986234, US6693255, US9895771 and EP0927595.

Such known machines can be improved, both in terms of productivity and safety for the operators working there.

### Summary of the invention

An object of the present invention is to overcome the drawbacks illustrated above by providing a machine that is highly efficient and relatively economic a machine.

A further object of the present invention is to provide a machine that is highly productive.

A further object of the present invention is to provide a machine which is particularly safe for the personnel working there.

These and other objects which will be more apparent hereinafter, are achieved by a semiautomatic machine for the laser processing of elements to be processed, as well as by a method implemented by a computer and a software program for controlling such machine, as described and/or claimed and/or illustrated herein.

The dependent claims illustrate advantageous embodiments of the invention.

### Brief description of the drawings

Further characteristics and advantages of the invention will be more apparent in light of the detailed description of some preferred but non-exclusive embodiments of the invention, illustrated by way of non-limiting example with reference to the attached drawings, wherein:

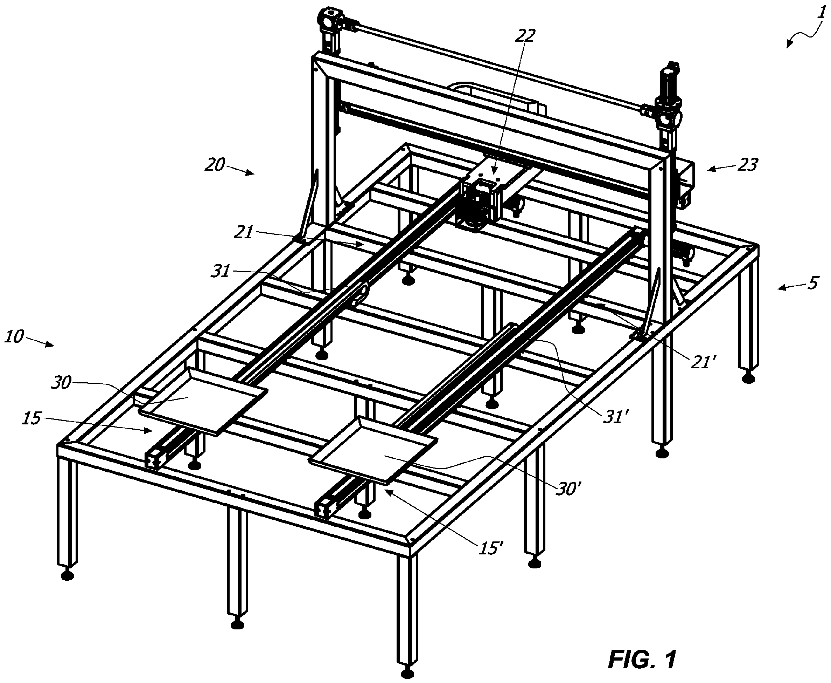

**FIG. 1** is a schematic view of some details of the machine **1,** without shielding means for the sake of simplicity;
**FIGS. 2** to **6** are schematic views of the machine **1** in various operating steps.

### Detailed description of some preferred embodiments

With reference to the aforementioned figures, herein described is a machine **1** for the laser processing of elements to be processed **E.**

For example, the machine **1** may carry out the laser paint stripping of branching boxes or metal electrical cabinets, which usually have the entire surface thereof painted with polyester resins and they should be paint-stripped so as to allow the earthing thereof.

However, it is clear that the machine **1** may carry out any processing on any element to be processed without departing from the scope of protection of the attached claims.

The machine **1** may be of the semiautomatic type, that is in which the loading and the unloading of the elements to be processed **E** are carried out manually by an operator, preferably a single operator.

Generally, the machine **1** may comprise a zone **10** for the manual loading/unloading of the elements to be processed **E** by the operator and another zone **20** for the processing of the elements to be processed **E.**

In a preferred but non-exclusive embodiment of the invention, the machine **1** may comprise a support structure, for example a metal frame **5,** which may comprise the two loading/unloading zones **10** and processing zones **20.**

In particular, the latter may respectively comprise two or more loading/unloading areas **15, 15'** arranged side-by-side and two or more processing areas **21, 21',** also preferably arranged side-by-side, on which a single laser processing head **22** may process reciprocatingly and selectively. Suitably, the laser processing head **22** may be mounted on a 2-axis Cartesian system **23,** while the pieces to be processed **E** may move on respective rails, as better specified below.

In the example mentioned above, such laser processing head **22** may be an ablative laser paint stripping head.

Respective cradles **30, 30'** for supporting the elements to be processed **E** may be provided for between the loading/unloading areas **15, 15'** and the processing areas **21, 21'.** Such cradles **30, 30'** may slide on respective guide rails **31, 31'.** During the processing of the elements to be processed **E** by the laser processing head **22,** the cradles **30, 30'** may move along the guide rails **31, 31'** to define the third processing axis.

Furthermore, the machine **1** may include laser shielding means for protecting the operator, for example several protection panels **41** around the metal frame **5.**

Such shielding means at the loading/unloading zone **10** may provide for two or more movable doors **40, 40'** for access respectively to the loading/unloading areas **15, 15'** and two or more respective movable safety doors **45, 45'.**

The operation of the machine **1** may be controlled by a PLC microprocessor control unit **50,** which may be run by a suitable control software programme suitable to ensure the maximum productivity of the machine and maximum safety of the operator at the same time.

As clear, the machine **1** includes several components arranged side-by-side, in particular the loading/unloading areas **15, 15',** the processing areas **21, 21',** the cradles **30, 30',** the access doors **40, 40'** and the safety doors **45, 45'.** Even though for the sake of simplicity described hereinafter is a machine **1** solely with reference to the components arranged on a single side, it is clear that they will operate similarly even for components on the other side.

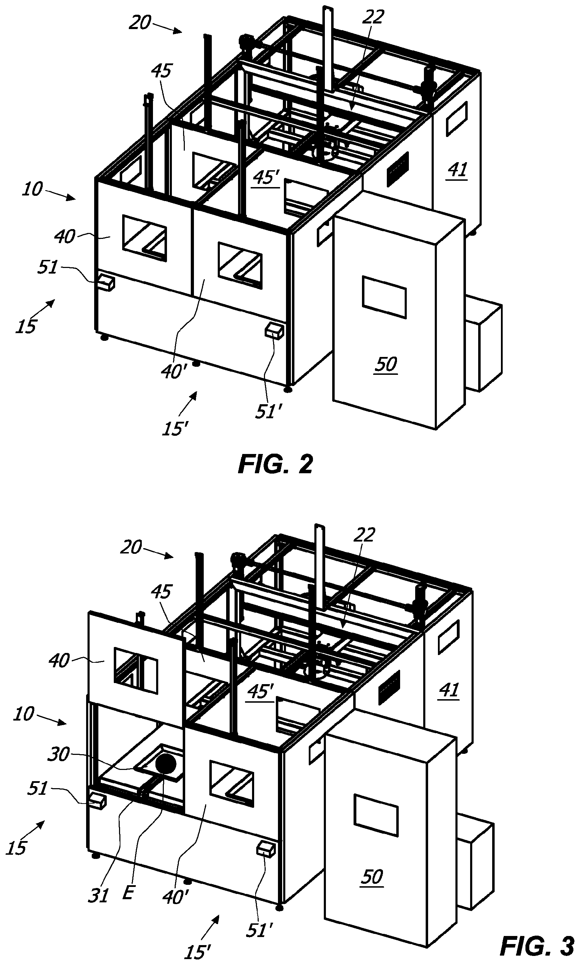

At the beginning of the work cycle, for example illustrated in FIG. 2, the PLC **50** may verify whether the machine **1** is in the start condition and otherwise set such condition, in which for example the access door **40** is unlocked, the cradle **30** is at the loading/unloading area **15,** the safety doors **45, 45'** are closed and the processing head **22** is switched off and in standby at the processing area **21.**

The operator may set on the PLC **50** the processing that the processing head **22** is to carry out. Possibly, such processing may already be pre-set.

Subsequently, as illustrated for example in FIG. 3, using the switch **51** the operator may open the door **40** and manually load element **E** to be processed into the cradle **30.** Alternatively, the doors **40, 40'** may open automatically once the doors **45, 45'** are closed and the respective cradle **30, 30'** is in the respective loading/unloading zone **15, 15'.**

Subsequently, still using the switch **51,** the operator may start the processing cycle, which may provide for the following steps.

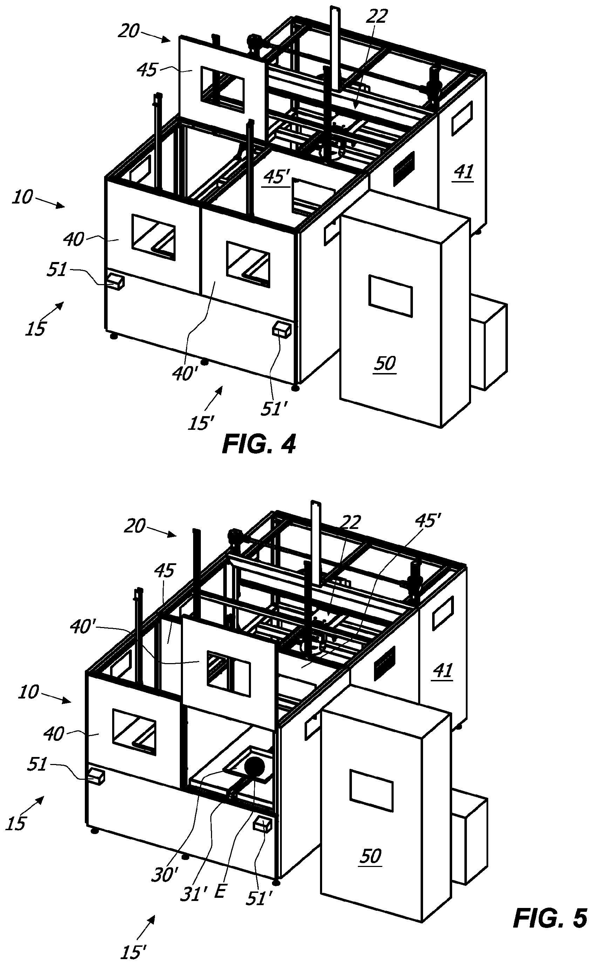

Firstly, the door **40** will close and will be locked, so as to prevent the manual opening thereof by the operator. Afterwards, the cradle **30** on which the elements to be processed **E** is loaded slides along the rail **31** from the loading/unloading area **15** toward the processing area **21** before the automatic lifting and lowering of the safety door **45,** for example as illustrated in FIG. 4.

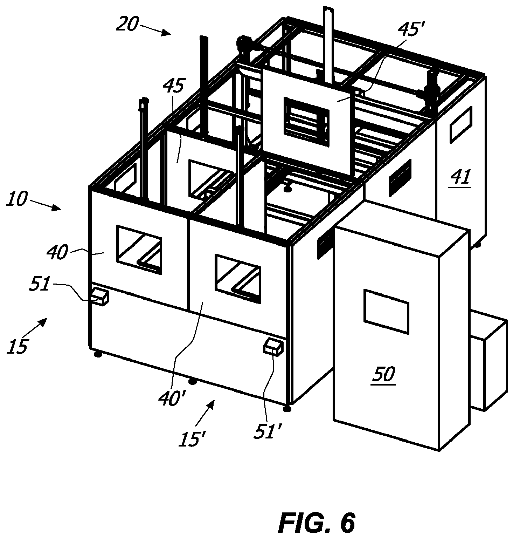

At the same time, the access door **40'** may be unlocked so as to allow the opening thereof by the operator by means of the switch **51',** for example as illustrated in FIG. 5. Similarly to the operations carried above, the operator may load another element to be processed **E** in the cradle **30'to** start the work cycle, still with the switch **51',** for example as illustrated in FIG. 6.

In the meantime, once the cradle **30** reaches the processing area **21,** the processing head **22** starts processing on 3 axes (2 of the Cartesian system **23** and one of the rail) carrying out the processing predetermined or set by the operator.

Once through with the processing, the processing head **22** is switched off and moves toward the other processing area **21',** while the cradle **30** with the processed element **E** slides along the rail **31** in the reverse direction with respect to what is illustrated above until it reaches the loading/unloading area **15,** in which the operator may unload the processed element and load a new one to be processed to restart the cycle after opening the door **40.**

During the latter operations, similarly to what is described above, the processing head **22** will process the element **E** previously loaded on the cradle **30',** which will slide along the rail **31'** up to the processing are **21'.**

The aforementioned cycle will continue till the end of shift, when the machine **1** will be switched off still through the PLC **50.**

Due to the operation outlined above, the machine **1** will be highly productive and it will use a single operator which may alternatively process the two sides of the metal frame **5.**

Besides the first transient, while the laser processing head **22** actually carries out the processing in one of the two processing areas of the machine, for example the **21'** one, the operator may unload the processed element **E** and load a new one to be processed in the loading/unloading area **15** and then start the cycle acting on the switch **51,** before carrying out the same operation in the adjacent loading/unloading area **15'** once the cradle **30'** is in such area.

Furthermore, the PLC **50** will ensure the total safety of the operator.

As a matter of fact, the PLC **50** may be programmed so as to allow the selective manual opening of one of the access doors, for example the door **40,** by the operator only when both safety doors **45, 45'** are closed. Furthermore, the doors **40, 40'** may be opened only when the respective cradles **30, 30'** are in the respective loading/unloading zone **15, 15'.**

In light of the above, it is clear that the invention attains the pre-set objectives.

The invention is susceptible to numerous modifications and variants, all falling within the inventive concept outlined in the attached claims. All details can be replaced by other technically equivalent elements, and the materials can be different depending on the technical needs, without departing from the scope of protection.

Even though to the invention has been described with reference to the attached figures, the reference numbers utilised in the description and in the claims are meant for improving the intelligibility of the invention and thus do not limit the claimed scope of protection in any manner whatsoever.

## Claims

1. A semiautomatic machine for the laser processing of elements to be processed **(E),** comprising:
- a zone **(10)** for the manual loading/unloading of the elements to be processed **(E)** by an operator;
- a zone **(20)** for processing the elements to be processed **(E);**
- means **(30, 30')** for the displacement of the elements to be processed **(E);**
- laser shielding means **(40, 40'; 45, 45');**
wherein said loading/unloading zone **(10)** comprises at least one first and one second loading/unloading area **(15, 15')** arranged side-by-side, said processing zone **(20)** including at least one first and one second processing area **(21, 21'),** said displacement means comprising at least one first and one second cradle **(30, 30')** for supporting at least one element to be processed **(E),** each cradle **(30, 30')** being movable between a respective first or second loading/unloading area **(15, 15')** and a corresponding first or second processing area **(21, 21'),** said processing zone **(20)** including a single laser processing head **(22)** movable reciprocatingly between said first and second processing area **(21, 21')** to carry out a predetermined or settable processing on the at least one element to be processed **(E)** loaded into the at least one first or second cradle **(30, 30');**
wherein said laser shielding means include at least one first and one second movable door **(40, 40')** for the access of the operator from the external to said at least one first and one second cradle **(30, 30'),** respectively and at least one third and one fourth movable safety door **(45, 45')** interposed respectively between said at least one first and one second movable door **(40, 40')** and said first and second processing area **(21, 21')** to open automatically when the respective first and second cradle **(30, 30')** pass through;
wherein the machine further comprises control means **(50)** operatively connected with said processing head **(22),** with said at least one first and one second access door **(40, 40')** and to said at least a third and a fourth safety door(**45, 45')** to allow the opening of at least one first or at least one second access door **(40, 40')** only when respectively both said third and fourth safety door **(45, 45')** are closed, so that the operator can safely act on said at least one first and one second cradle **(30, 30').**

2. Machine according to claim 1, wherein said control means **(50)** are further configured to promote said automatic opening of said at least one third or one fourth safety door **(45, 45')** for the respective first or second cradle **(30, 30')** to pass through only when the respective first or second access door **(40, 40')** is closed.

3. Machine according to claim 1 or 2, wherein said control means **(50)** are further configured to allow the opening of at least one first or at least one second access door **(40, 40')** only when respectively the first or second cradle **(30, 30')** in said respective first or second loading/unloading area (**15**, **15'**).

4. Machine according to claim 1, 2 or 3, wherein said at least one first or at least one second access door **(40, 40')** can be selectively and manually opened by the operator.

5. Machine according to one or more of the preceding claims, wherein said control means **(50)** comprise at least one first and one second switch **(51, 51')** which can be actuated manually and selectively by the operator once the at least one elements to be processed **(E)** has been loaded into the respective at least one first or one second cradle **(30, 30')** to promote the displacement thereof from the respective first or second loading/unloading **area(15, 15')** toward the corresponding first or second processing area **(21, 21'),** at least one first and one second switch **(51, 51')** further promoting the closure of the respective first or second access door **(40, 40')** and the automatic opening of the respective third or fourth safety door **(45, 45').**

6. Machine according to any one of the preceding claims, wherein said control means **(50)** are configured to control the automatic actuation of said processing head **(22)** positioned in one of said at least one first or one second processing area **(21, 21')** only when the respective first or second cradle **(30, 30')** is also positioned in the latter, said control means **(50)** being further configured to promote the displacement of the processing head **(22)** toward the other of said at least one first or one second processing area **(21, 21')** and the displacement of the at least one first or one second cradle **(30, 30')** toward the respective first or second loading/unloading area **(15, 15')** when the processing head **(22)** ends the processing on the elements to be processed **(E),** said control means **(50)** further being configured to promote the automatic opening of the respective third or fourth safety door **(45, 45')** to allow the at least one first or second cradle **(30, 30')** respectively to pass through.

7. Machine according to any one of the preceding claims, further comprising a support structure **(5)** including:
- said at least one first and one second loading/unloading area **(15, 15')** arranged side-by-side;
- said at least one first and one second processing area **(21, 21');**
- said at least one first and one second cradle **(30, 30');**
- said laser processing head **(22);**
- said at least one first and one second access port **(40, 40')** and said at least one third and one fourth movable safety door **(45, 45');**
wherein said support structure further comprises at least one pair of guide rails **(31, 31'),** each of the latter comprising a respective support cradle **(30, 30').**

8. Machine according to any one of the preceding claims, wherein said laser processing head **(22)** includes at least one ablative laser, the processing carried out by the laser processing head **(22)** being a paint stripping, the elements to be processed **(E)** being elements to be paint-stripped by means of said ablative laser, wherein preferably:
- said laser processing head **(22)** is mounted on a 2-axis Cartesian system **(23);**
- said control means **(50)** are configured to move each support cradle **(30, 30')** along the respective guide rail **(31, 31')** during the processing of the elements to be processed **(E)** by said laser processing head **(22).**

9. A computer-implemented method for controlling a semiautomatic machine according to one or more of the preceding claims, the machine having:
- one of the at least one first and one second access door **(40, 40')** open or unlocked to allow the manual opening by the operator;
- the respective at least one first or one second cradle **(30, 30')** at the respective first or second loading/unloading area **(15, 15'),** so as to allow the operator to load at least one element to be processed **(E);**
- said at least one third and one fourth movable safety door **(45, 45')** in closed position;
- the processing head **(22)** is switched off and arranged at the respective at least one first or one second processing area **(21, 21');**
wherein the method cyclically comprises the following steps in response to a cycle-start command by the operator:
a) closing said one of at least one first and one second movable door **(40, 40')** and relative locking;
b) displacement of said respective at least one first or one second cradle **(30, 30')** from the first or second loading/unloading area **(15, 15')** toward the respective at least one first or one second processing area **(21, 21');**
c) opening and subsequent closing of the respective at least one third or one fourth movable safety door **(45, 45')** to allow the respective at least one first or one second cradle **(30, 30')** to pass through;
d) activating the processing head **(22)** once said at least one first or one second cradle **(30, 30')** is at said respective at least one first or one second processing area **(21, 21')** to carry out a predetermined or settable processing on the at least one element to be processed **(E);**
e) turning off the processing head **(22)** once the processing is finished;
f) displacing said processing head **(22)** toward the other of said at least one first or one second processing area **(21, 21');**
g) displacing at least one first or one second cradle **(30, 30')** toward the respective first or second loading/unloading area **(15, 15');**
h) opening and subsequent closing of the respective third or fourth safety door **(45, 45')** to allow the at least one first or one second cradle **(30, 30')** to pass through;
i) stopping at least one first or one second cradle **(30, 30')** at the respective first or second loading/unloading area **(15, 15');**
j) unlocking said one of the at least one first and one second movable door **(40, 40')** to allow the manual opening by the operator.

10. A computer program for controlling a semiautomatic machine according to one or more of claims 1 to 8, comprising instructions which, once run by a processor, command the processor to cyclically carry out steps a) to j) of the method according to the preceding claim.
